# EUROPÄISCHE PATENTANMELDUNG

(11) **EP 4 019 301 A1**
(43) Veröffentlichungstag der Anmeldung: **29.06.2022**
(21) Anmeldenummer: 20000491.9
(22) Anmeldetag: 28.12.2020
(51) Int. Cl.: B60G 3/20, B60G 11/26

(54) **SPURWEITENVERÄNDERLICHE ACHSVORRICHTUNG, SPEZIALFAHRZEUG UND VERWENDUNG DESSELBEN**

(71) Anmelder: MARMIX GmbH & Co. KG, 89597 Unterwachingen (DE)
(72) Erfinder: Fuß, Sebastian, 84076 Pfeffenhausen (DE)
(74) Vertreter: Kimpfbeck, Thomas

(57) **Zusammenfassung**

Es wird eine spurweitenveränderliche Achsvorrichtung (18; 20) für ein Spezialfahrzeug beschrieben. Die spurweitenveränderliche Achsvorrichtung (18; 20) umfasst eine gelenkige Parallelführung (21) und eine Einzelradaufhängung (22), wobei die Einzelradaufhängung (22) an der gelenkigen Parallelführung (21) angeordnet ist, um spurweitenveränderlich und einen Achsabstand zu einer weiteren Achse des Spezialfahrzeugs variierend schwenkbar zu sein. Ferner wird ein Spezialfahrzeug (19) mit der spurweitenveränderlichen Achsvorrichtung (18; 20) und die Verwendung des Spezialfahrzeugs (19) vorgeschlagen.

## Beschreibung

### TECHNISCHES GEBIET

Die vorliegende Erfindung betrifft eine spurweitenveränderliche Achsvorrichtung für ein Spezialfahrzeug. Außerdem betrifft die Erfindung ein Spezialfahrzeug mit der spurweitenveränderlichen Achsvorrichtung sowie eine Verwendung des Spezialfahrzeugs.

### STAND DER TECHNIK

Schmale Spurweiten sind optimal für die Getreideernte. Damit Reifen beim Lenken einen Fahrzeugrahmen nicht berühren ist der Wendekreis von Fahrzeugen mit schmaler Spurweite sehr groß. Die DE 10 2014 221 462 A1 beschreibt als Abhilfe dazu eine Axialführung und Hydraulikzylinder, die die Räder gegenüber der jeweiligen Radnabe parallel zu einer Drehachse axial verschieben können.

Hubarbeitsbühnen müssen oft durch enge Türen oder Fahrwege manövriert werden. Die EP 2 165 852 A1 beschreibt dazu eine Vorrichtung zur Spurverringerung von Reifen der selben Achse, indem ein Zylinder eine zwei Achsabschnitte verbindende Verbindungswelle derart betätigt, dass sich die zwei Achsabschnitte parallel zueinander einwärts bewegen. In einer zweiten Stufe werden Zylinder eingefahren, um die Spur weiter zu verringern.

Aus der US 2010283218 A1 ist ein Glied bekannt, das ein Hinterrad mittels eines Hydraulikzylinders ein- und ausschwenken kann, um die Spur zu verändern. Ein Drehaktor am Hinterrad stellt währenddessen den Geradeauslauf sicher. Unter Drehaktoren versteht die US 2010283218 A1 u.a. auch lineare Hydraulikzylinder.

Die GB2424630 beschreibt ein Sprühfahrzeug, das seinen Radstand an Pflanzenreihen anpassen kann. Das Sprühfahrzeug hat eine Hinterachse mit hydraulisch ausfahrbaren Rädern, sowie ein Lenkgestänge, das das Lenken in einem ein- und einem ausgefahrenen Zustand erlaubt. Es wird auch ein Sprühfahrzeug mit zwei lenkbaren und ausfahrbaren Achsen beschrieben. Als Antrieb dienen Hydraulikmotoren an jedem Rad.

Die US 2005039278 A beschreibt eine Kehrmaschine mit einem Paar lenk- und ausfahrbarer Räder, die während sie mit einer Straße in Kontakt sind, zwischen einer schmalen Betriebsart zum Kehren und einer breiten Betriebsart, die für einen schnellen Transport eine erhöhte Stabilität ergibt, eingestellt werden. Das Ausfahren bewirken zwei scherenartig verschränkte Hydraulikzylinder. Ein Lenken wird mittels eines Lenkzylinders sowie mehrerer Hebelkomponenten bewirkt. Jedes Rad wird unabhängig von einem Hydraulikmotor angetrieben.

Die CH 693740 A beschreibt ein landwirtschaftliches Fahrzeug mit einem Antrieb und mindestens einer Verschieb- und neigbaren Radaufhängung, welche aus einer neigbaren Radachse, einer Spurstange für jedes Rad zur Radsturzeinstellung und jeweils beidseitig der Radachse einer Kolben-Zylinder-Einheit zur hydraulischen Neigungseinstellung der Radachse zum Höhenausgleich im Gelände besteht. Die Radachse ist endseitig mit verschiebbaren Radträgern versehen, die jeweils mit einem Schiebemittel zur Einstellung der Spurweite zwischen den beiden Rädern verschiebbar sind.

Die US 5489113 A beschreibt eine Spurstangenbaugruppe mit einem Hydraulikzylinder, um die Spurweite eines Fahrzeugs einzustellen, ohne eine Vorspureinstellung zu beeinflussen.

Die US 5282644 A beschreibt eine Lenkungsbaugruppe, die ein starres röhrenförmiges Achsgehäuse umfasst, das sich seitlich erstreckt und an einem Traktorrahmen befestigt ist. Axial darin angeordnet ist ein Paar von teleskopierbaren rohrförmigen Zylindern, die sich jeweils von der Mitte des Achsgehäuses und über ein entsprechendes distales Ende davon hinaus erstrecken. Jeder Zylinder kann in seitlicher Richtung von einer innersten Position nach außen in seitlicher Richtung verstellt werden, um eine Spurverstellung zu erreichen.

Die US 3779581 A beschreibt eine Fahrzeugaufhängung zur variablen Einstellung einer Spurweite und einer Bodenfreiheit, wobei der Rahmen des Fahrgestells ein Hohlkörper ist, der einen in Längsrichtung angeordneten Hydraulikzylindermechanismus enthält, über den die Räder aufgehängt sind, wobei die Betätigungsverbindungen zu den Radpositionierungsarmen über Umlenkhebel erfolgen.

### AUFGABE

Somit besteht die Aufgabe der Erfindung darin eine flexibler einsetzbare Achsvorrichtung und ein flexibler einsetzbares Spezialfahrzeug mit der Achsvorrichtung bereitzustellen, wobei insbesondere eine größere Spurweitenveränderlichkeit und eine zugleich verbesserte Entlastung einer weiteren Achse bezweckt ist.

### OFFENBARUNG DER ERFINDUNG

Erfindungsgemäß werden eine spurweitenveränderliche Achsvorrichtung für ein Spezialfahrzeug gemäß Anspruch 1, ein Spezialfahrzeug gemäß Anspruch 10 und eine Verwendung des Spezialfahrzeugs gemäß Anspruch 11 bereitgestellt.

Die erfindungsgemäße spurweitenveränderliche Achsvorrichtung umfasst insbesondere eine gelenkige Parallelführung und eine Einzelradaufhängung, wobei die Einzelradaufhängung an der gelenkigen Parallelführung angeordnet sein kann, um spurweitenveränderlich und einen Achsabstand zu einer weiteren Achse des Spezialahrzeugs variierend schwenkbar zu sein. Ferner kann die Achsvorrichtung eine Vorderachse umfassen oder eine solche bilden und die weitere Achse kann eine Hinterachse umfassen oder eine solche bilden.

Der Begriff Spezialfahrzeug soll vorzugsweise eine oder mehrere der folgenden Bedeutungen umfassen:
- Landfahrzeug,
- Radfahrzeug,
- Löschfahrzeug,
- militärisches Radfahrzeug, z.B.:
   ∘ Trägerfahrzeug,
   ∘ Selbstfahrlafette,
   ∘ Bergefahrzeug,
   ∘ Abschleppfahrzeug,
   ∘ Minenräumfahrzeug,
- landwirtschaftliches Fahrzeug, z.B.:
   ∘ Traktor,
   ∘ Schlepper,
   ∘ Erntemaschine,
   ∘ Sähmaschine,
   ∘ Anhänger,
- Zugmaschine,
- selbstfahrendes Arbeitsgerät,
- Baumaschine, z.B.:
   ∘ Bagger,
   ∘ Fahrbagger,
   ∘ Bohrgerät,
   ∘ Fahrzeugkran,
   ∘ Arbeitsbühne,
- forstwirtschaftliches Fahrzeug, z.B.
   ∘ Holzvollernter,
   ∘ Tragschlepper,
   ∘ Rückezug,
   ∘ Skidder,
- Lastkraftwagen.

Als Spurweite (englisch: Track) bezeichnet man im Allgemeinen den Abstand zwischen zwei Radaufstandspunkten einer Achse. Die Spurweite hat normalerweise in Verbindung mit der Schwerpunkthöhe eines Fahrzeugs Einfluss auf eine Kippgrenze. Während die Spurweite bei herkömmlichen Personenkraftwagen meist festgelegt ist oder nur mittels unterschiedlicher Radbreiten geringfügig variierbar ist, ist eine Spurweitenveränderung bei Spezialfahrzeugen u.a. aus folgenden Gründen vorteilhaft. Das erfindungsgemäße Spezialfahrzeug soll bei Hanglagen nicht umkippen, deshalb soll die Spurweite um 50% oder sogar um 100% erhöhbar bzw. variierbar sein. Das erfindungsgemäße Spezialfahrzeug soll sowohl auf schmalen Straßen, Feldwegen, unwegsamen Gelände, Minenfeldern, Hängen, Wäldern als auch auf Fahrgassen fahren können. Fahrgassen sind im Allgemeinen Teile eines Ackers, die während des Wachstums einer Kulturpflanze wiederholt für Pflegemaßnahmen befahren werden. Fahrgassen können unterschiedliche Breiten aufweisen, daher ist es von Vorteil, wenn die erfindungsgemäße Achsvorrichtung eine stufenlose Spurweitenänderung erlaubt. Auf Straßen kann die Spurweite des erfindungsgemäßen Spezialfahrzeugs vorteilhaft minimal eingestellt werden. Das erfindungsgemäße Spezialfahrzeug umfasst vorzugweise ein Führerhaus und einen Geräteaufbau, etwa einen Tank, eine Ladefläche oder dergleichen. Das Führerhaus kann an, nahe oder über einer ersten Achse, insbesondere einer Vorderachse, angeordnet sein. Der Geräteaufbau kann an, nahe oder über einer zweiten Achse, insbesondere einer Hinterachse, angeordnet sein. Ist der Tank befüllt oder die Ladefläche beladen, so ist die zweite Achse stark belastet bzw. mehr belastet als die erste Achse. Die erfindungsgemäße spurweitenveränderliche Achsvorrichtung kann die Einzelradaufhängung mittels der gelenkigen Parallelführung insbesondere derart schwenken, dass bei einem Ausschwenken der Einzelradaufhängung eine Spurweite bezüglich einer anderen Einzelradaufhängung derselben Achse vergrößert wird. Beim Ausschwenken kann die Einzelradaufhängung den Achsabstand zu der weiteren Achse, insbesondere der Hinterachse, verringern. Gemäß einer bevorzugten Weiterbildung kann bei einem Ausschwenken gleichzeitig die Spurweite erhöht und der Achsabstand verringert werden. Bei einem Einschwenken kann gleichzeitig die Spurweite verringert und der Achsabstand erhöht werden.

Die erfindungsgemäße Achsvorrichtung löst dadurch inbesondere das Problem zunehmenden Gewichts von landwirtschaftlichen Fahrzeugen, das meist auch mit einer zunehmende Belastung von Böden in Form von Bodendruck und -verdichtung einhergeht. Zudem müssen landwirtschaftliche Fahrzeuge im Allgemeinen über das öffentliche Straßensystem zu den landwirtschaftlichen Flächen fahren können, um diese nachfolgend zu bearbeiten. Entsprechend ist das erfindungsgemäße Spezialfahrzeug den zum Teil gegenläufigen Rahmenbedingungen für eine Straßenzulassung und von Feldanforderungen angepasst. So sind insbesondere Gewicht, Höhe und Breite von Fahrzeugen, für das öffentliche Straßensystem begrenzt. Das erfindungsgemäße Spezialfahrzeug ist insbesondere spezifisch den Erfordernissen eines bestimmten Arbeitsganges in der Landwirtschaft, Forstwirtschaft oder auf einem Minenfeld angepasst und kann so dem Problem der Bodenbelastung etwa durch eine gleichmässigere Lastverteilung auf Vorder- und Hinterachse und/oder durch unterschiedliche Spurweiteneinstellungen für Vorder- und Hinterachse entgegenwirken. Neben der variablen Spurweiteneinstellung verfügt die erfindunsgemäße Achsvorrichtung insbesondere auch über eine variabel einstellbare Gewichtsverteilung zwischen Vorder- und Hinterachse des Spezialfahrzeugs.

Die Begriffe "schwenkbar", "Schwenken", "Einschwenken" oder "Ausschwenken" sollen im Allgemeinen die Bedeutungen von "drehen", "rotieren" und/oder "klappen" umfassen.

Der Begriff "angelenkt" soll im Allgemeinen die Bedeutung von "über eine bewegliche Verbindung verbunden", "über ein Drehgelenk verbunden" und/oder "über eine Bohrung und einen Bolzen verbunden" umfassen.

Der Begriff "gelenkig" soll im Allgemeinen die Bedeutung von "in sich beweglich", "durch eine bewegliche Verbindung beweglich" und/oder "durch ein oder mehrere Gelenke beweglich" umfassen.

Der Begriff "verbunden" soll im Allgemeinen die Bedeutung von "gelenkig verbunden", "verschraubt", "gefügt", "verschweißt", "verklebt" und/oder "vernietet" umfassen.

Der Begriff "Parallelführung" soll im Allgemeinen die Bedeutung von "wenigstens zwei parallelen oder im Wesentlichen parallelen Elementen oder Hebeln" umfassen. Die Parallelführung unterscheidet sich damit insbesondere von bekannten Führungen mit nur einem Element bzw. Hebel.

Gemäß einer weiteren Ausgestaltung umfasst die Parallelführung insbesondere einen Haupttragarm mit einem ersten und einem zweiten Ende; einen Parallelführungsarm mit einem ersten und einem zweiten Ende, wobei der Parallelführungsarm parallel zum Haupttragarm angeordnet ist; und ein Übergangsjoch, das am erste Ende des Haupttragarm angelenkt ist und das am erste Ende des Parallelführungsarms angelenkt ist. Die Parallelführung kann das Übergangsjoch parallel oder im Wesentlichen parallel zu einem Fahrzeugrahmen des Spezialfahrzeugs schwenken. Dadurch kann ein Geradeauslauf eines an der Einzelradaufhängung angeordneten Rades in jeder Spurweiteneinstellung erzielt werden.

In einer weiteren Ausführung kann das zweite Ende des Haupttragarms ein Gelenk zur Verbindung mit einem Fahrzeugrahmen des Spezialfahrzeugs aufweisen und das zweite Ende des Parallelführungsarms ein Gelenk zur Verbindung mit dem Fahrzeugrahmen aufweisen. Der Haupttragarm, der Parallelführungsarm, das Übergangsjoch und der Fahrzeugrahmen können eine geschlossene kinematische Kette bilden.

Gemäß einer weiteren Ausgestaltung kann die Einzelradaufhängung am Übergangsjoch angeordnet sein. Die Einzelradaufhängung ist im Allgemeinen eine Bauart einer Radführung, bei der die gegenüberliegende Räder mehrspuriger Fahrzeuge unabhängig voneinander einfedern können. Die Einzelradaufhängung ist im Wesentlichen ein Mechanismus mit einem Freiheitsgrad f=1.

In einer Weiterbildung umfasst die erfindungsgemäße spurweitenveränderliche Achsvorrichtung insbesondere einen Schwenkaktor, der an einem Fahrzeugrahmen des Spezialfahrzeugs angelenkt sein kann und der an der gelenkigen Parallelführung angelenkt sein kann, um die Parallelführung bezüglich des Fahrzeugrahmens zu schwenken. Der Schwenkaktor umfasst im Allgemeinen einen Linearmotor oder einen Hydraulikzylinder. Der Schwenkaktor ist insbesondere am Haupttragarm angelenkt. Der Schwenkaktor kann dazu eingesetzt werden die Parallelführung bzw. die Einzelradaufhängung ein- oder auszuschwenken. Genauer gesagt, kann der Schwenkaktor dazu eingesetzt werden die Parallelführung bzw. die Einzelradaufhängung in einer horizontalen Ebene bzw. in einer im wesentlichen horizontalen Ebene ein- oder auszuschwenken. Die horizontale Ebene liegt dabei bevorzugt parallel zu einer Fahrbahn für das Spezialfahrzeug. Der Schwenkaktor kann vom Führerhaus des Spezialfahrzeugs aus angesteuert werden, um die Parallelführung bzw. die Einzelradaufhängung stufenlos ein- oder auszuschwenken.

Gemäß einer weitere Ausgestaltung kann die erfindungsgemäße spurweitenveränderliche Achsvorrichtung einen Lenkaktor umfassen, der an der Einzelradaufhängung angelenkt sein kann und der an der gelenkigen Parallelführung angelenkt sein kann, um die Einzelradaufhängung bezüglich der gelenkigen Parallelführung zu schwenken. Genauer gesagt, kann der Lenkaktor an einem Lenkhebel angelenkt sein, wobei der Lenkhebel durch einen Achsschenkelzapfen am Übergangsjoch angelenkt sein kann. Der Lenkhebel ist insbesondere starr an einem Radnabentrichter anordnet. Auf dem Randnabentrichter kann ein Rad drehbar montiert sein. Der Lenkaktor umfasst im Allgemeinen einen Linearmotor oder einen Hydraulikzylinder. Der Lenkaktor kann insbesondere vom Führerhaus des erfindungsgemäßen Spezialfahrzeugs aus mittels eines Lenkrads, eines Sidestick oder dergleichen angesteuert werden, um das erfindungsgemäße Spezialfahrzeug in eine Kurvenfahrt oder einen Hundegang zu versetzen.

Gemäß einer weiteren Ausgestaltung kann die spurweitenveränderliche Achsvorrichtung eine Basiskonsole umfassen, die um eine Längsachse des Spezialfahrzeugs schwenkbar am Fahrzeugrahmen angelenkt sein kann und die an der gelenkigen Parallelführung angelenkt sein kann. Insbesondere ist die gelenkige Parallelführung um eine Hochachse schwenkbar an der Basiskonsole angelenkt, wobei die Hochachse im Wesentlichen in einem rechten Winkel zur Längsachse des Spezialfahrzeugs angeordnet ist. Genauer gesagt, kann die Basiskonsole ein Kardangelenk bilden.

In einer Weiterbildung kann die erfindungsgemäße spurweitenveränderliche Achsvorrichtung einen Radnabenantrieb umfassen. Der Radnabenantrieb umfasst beispielsweise einen hydrostatischen Antrieb und/oder einen Elektromotor. Der Radnabenantrieb erlaubt beispielsweise ein Rad unabhängig von anderen Rädern des Spezialfahrzeugs anzutreiben. Ferner kann der Radnabenantrieb flexibel hinsichtlich Drehzahl und Drehrichtung angetrieben werden. Ferner kann beim Radnabenantrieb im Vergleich zu herkömmlichen Antrieben eine Antriebswelle oder eine Gelenkwelle entfallen.

Das erfindungsgemäße Spezialfahrzeug kann wenigstens zwei erfindungsgemäße spurweitenveränderliche Achsvorrichtungen umfassen. Insbesondere können zwei erfindungsgemäße spurweitenveränderliche Achsvorrichtungen die Vorderachse bilden.

Vorteilhafte Weiterbildungen der Erfindung sind in den Unteransprüchen angegeben und in der Beschreibung beschrieben.

Das erfindungsgemäße Spezialfahrzeug kann als landwirtschaftliches Fahrzeug, als Minenräumfahrzeug oder als forstwirtschaftliches Fahrzeug verwendet werden. Bei diesen Verwendungen können unwegsames Gelände oder besondere Anforderungen hinsichtlich Bodendruck bzw. Massenbelag vorliegen. Das erfindungsgemäße Spezialfahrzeug kann hierzu die Spurweite einer Achse und/oder den Achsabstand variieren, ein Einzelrad lenken und/oder antreiben und/oder mittels einer Art Pendelachse Hindernisse überfahren.

### KURZBESCHREIBUNG DER ZEICHNUNGEN

Ausführungsbeispiele der Erfindung werden anhand der Zeichnungen und der nachfolgenden Beschreibung näher erläutert. Es zeigen:
- Fig. 1: eine perspektivische Ansicht einer spurweitenveränderlichen Achsvorrichtung gemäß eines Ausführungsbeispiels der Erfindung,
- Fig. 2: eine Draufsicht der spurweitenveränderlichen Achsvorrichtung von Fig. 1,
- Fig. 3: eine Vorderansicht der spurweitenveränderliche Achsvorrichtung von Fig. 1,
- Fig. 4: eine Draufsicht der spurweitenveränderliche Achsvorrichtung von Fig. 1 in einem eingefahrenen Zustand und
- Fig. 5: ein Ausführungsbeispiel eines Spezialfahrzeugs gemäß der Erfindung.

### AUSFÜHRUNGSFORMEN DER ERFINDUNG

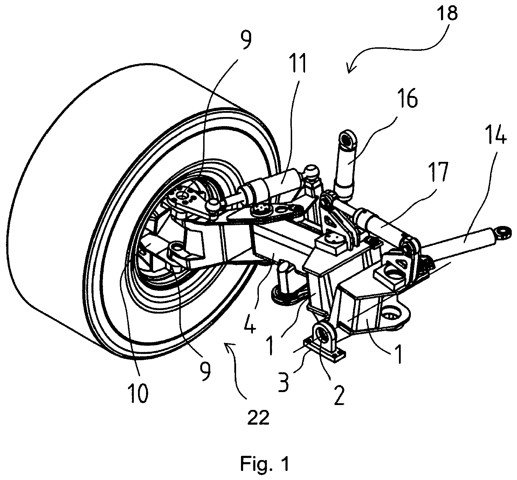

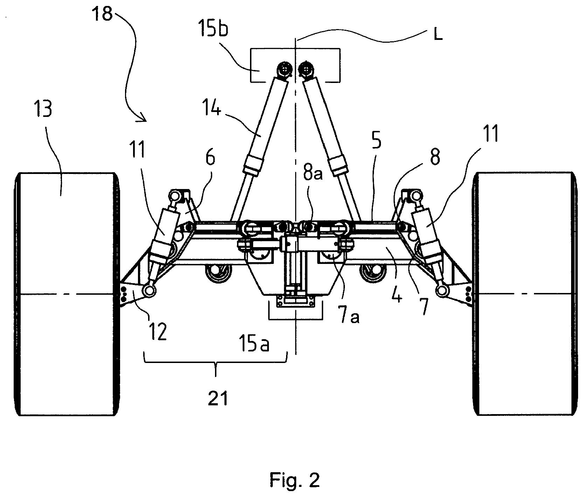

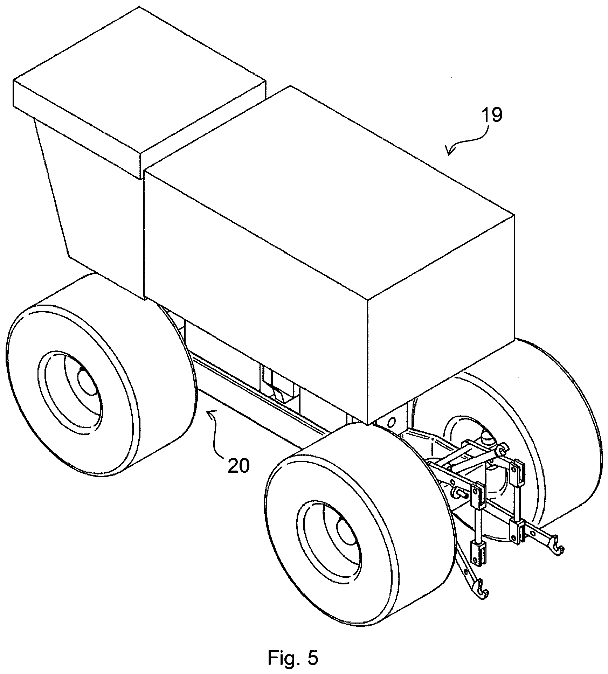

Fig. 1 zeigt ein Ausführungsbeispiel einer spurweitenveränderliche Achsvorrichtung 18 für ein Spezialfahrzeug 19, wie in Fig. 5 gezeigt, in perspektivischer Ansicht. Die spurweitenveränderliche Achsvorrichtung 18 ist in Fig. 1 bis 3 in einem ausgefahrenen Zustand gezeigt. Die spurweitenveränderliche Achsvorrichtung 18 umfasst eine Basiskonsole 1, einen Mittelachsbolzen 2 und eine Achskonsole 3. Die Basiskonsole 1 ist die über den Mittelachsbolzen 2 und die Achskonsole 3 mit einer Fahrzeugrahmenstelle 15a, in Fig. 2 gezeigt, in einer vertikalen Ebene schwenkbar verbunden. Die spurweitenveränderliche Achsvorrichtung 18 ist bezüglich einer Fahrzeuglängsachse L symmetrisch zu einer weiteren spurweitenveränderlichen Achsvorrichtung 18 ausgelegt. Beide spurweitenveränderlichen Achsvorrichtungen 18 bilden eine Vorderachse. Durch den symmetrischen Aufbau sind die Teile Basiskonsole 1, Haupttragarm 4, Parallelführungsarm 5, Übergangsjoch 6, Gelenkbolzen 7, 8, 7a, 8a, Achsschenkelzapfen 9, Radnabentrichter 10, Lenkzylinder 11, Lenkhebel 12, Rad 13, Schwenkzylinder 14 und Neigungs- und Stützzylinder 16 in den Zeichnungen Fig. 1 bis 4 doppelt vorhanden und werden im Folgenden deshalb entsprechend in Singular- und Pluralform verwendet.

Ferner umfasst die spurweitenveränderliche Achsvorrichtung 18 eine gelenkige Parallelführung 21. Die gelenkige Parallelführung 21 umfasst Gelenkbolzen 7, 8, 7a, 8a, wie in Fig. 2 gezeigt, einen Haupttragarm 4, eine Parallelführung 5 und ein Übergangsjoch 6. Über die Gelenkbolzen 7a, 8a, sind jeweils der Haupttragarm 4 und der Parallelführungsarm 5 mit der Basiskonsole 1 gelenkig verbunden. Die gelenkige Parallelführung 21 ermöglicht durch ihren Aufbau ein Aus- und Einschwenken des Haupttragarms 4 und des Parallelführungsarms 5 in einer im Wesentlichen horizontalen Ebene, wobei die horizontale Ebene parallel zu einer Fahrbahn für das Spezialfahrzeug und senkrecht zur vertikalen Ebene liegt. Der Haupttragarm 4 und der Parallelführungsarm 5 sind über die Gelenkbolzen 7, 8 gelenkig mit dem Übergangsjoch 6 verbunden. Das Übergangsjoch 6 wird beim Aus- und Einschwenken immer in gleich ausgerichteter bzw. paralleler Position zu der Basiskonsole 1 und damit zur Fahrzeuglängsachse L des Spezialfahrzeugs gehalten.

Eine Einzelradaufhängung 22 umfasst einen Achsschenkzapfen 9, einen Radnabentrichter 10, und einen Lenkhebel 12. Über den Achsschenkelzapfen 9 ist der Radnabentrichter 10 mit dem Übergangsjoch 6 gelenkig verbunden. Ein Lenkzylinder 11 bzw. Lenkaktor verbindet über den Lenkhebel 12, in Fig. 2 gezeigt, das Übergangsjoch 6 und den Radnabentrichter 10 lenkbar miteinander. Am Radnabentrichter 10 ist eine Radnabe angeordnet. Die Radnabe kann als Laufradnabe oder hydrostatisch angetriebene Nabe, mit oder ohne Bremse ausgeführt sein und hält ein Rad 13.

Durch den symmetrischen Aufbau der Vorderachse umfasst diese den Lenkzylinder 11 und einen weiteren Lenkzylinder 11. Die Lenkzylinder 11 sind stangenseitig hydraulisch verbunden und damit starr hintereinandergeschaltet. Sie ergeben in Verbindung mit den Lenkhebeln 12 die Funktion eines Lenktrapezes.

Die spurweitenveränderliche Achsvorrichtung 18 umfasst einen Schwenkzylinder 14 bzw. einen Schwenkaktor. Der Schwenkzylinder 14 ist am Haupttragarm 4 und an einer Fahrzeugrahmenstelle 15b angelenkt und bewirken ein stufenloses Aus- und Einfahren der spurweitenveränderlichen Achsvorrichtung 18 und deren Stabilisierung in einer Fahrzeuglängsrichtung bzw. in der Fahrzeuglängsachse L.

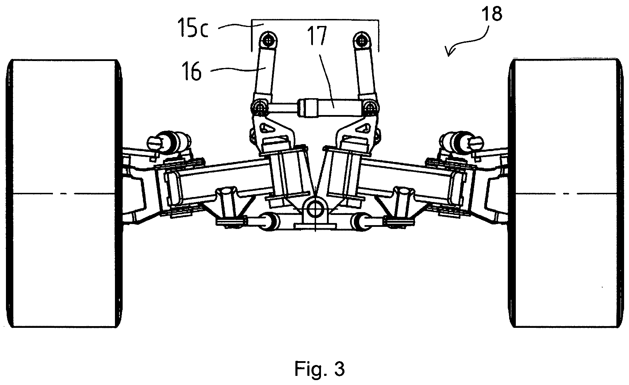

Die spurweitenveränderliche Achsvorrichtung 18 umfasst einen Neigungs- und Stützzylinder 16. Der Neigungs- und Stützzylinder 16 ist an der Basiskonsole 1 und an einer Fahrzeugrahmenstelle 15c, in Fig. 3 gezeigt, angelenkt. Ein Haupt-Federungszylinder 17 verbindet die zwei Basiskonsolen 1 und damit die beiden spurweitenveränderliche Achsvorrichtungen 28, siehe Fig. 3.

Der Neigungs- und Stützzylinder 16 und der Haupt-Federungszylinder 17 ermöglichen in Verbindung mit Speichern die Federung, sowohl als Einzelrad- als auch als Gesamtfederung. Der Neigungs- und Stützzylinder 16 ist mit einem weiteren Neigungs- und Stützzylinder 16 über Kreuz und mit Speichern hydraulisch verbunden; die Zylinder bewirken damit eine Seitenneigungs-Stabilisierung.

Bei einem quasistatischen Überfahren von Hindernissen wirken die zwei spurbreitenveränderliche Achsvorrichtungen 18 in Verbindung mit dem Haupt-Federungszylinder 17 als Pendelachse mit dem Vorteil, höhere Hindernisse überfahren zu können.

Ein Fahrzeugrahmen des Spezialfahrzeugs umfasst die Fahrzeugrahmenstellen 15a, 15b und 15c.

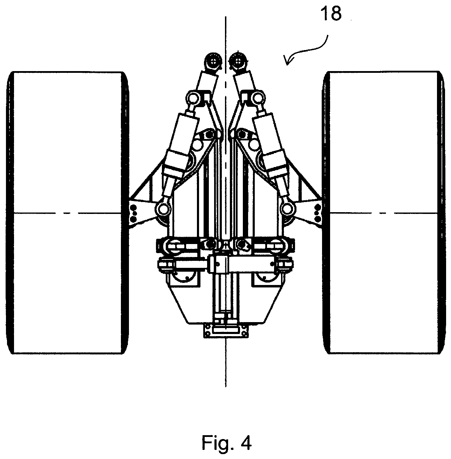

In Fig. 4 ist die spurbreitenveränderliche Achsvorrichtung 18 von Fig. 1, 2, 3 in Draufsicht in einem eingefahrenen Zustand gezeigt. Im eingefahrenen Zustand ist die Spurweite minimal und daher optimal für ein Befahren von öffentlichen Straßen. Im eingefahrenen Zustand ist außerdem der Achsabstand zur Hinterachse maximal.

In Fig. 5 ist ein Ausführungsbeispiel eines Spezialfahrzeugs 19 mit zwei spurweitenveränderlichen Achsvorrichtungen 20 gezeigt, die eine Vorderachse bilden. Die Spurweite hat in Verbindung mit der Schwerpunkthöhe eines Fahrzeugs Einfluss auf eine Kippgrenze. Während die Spurweite bei herkömmlichen Personenkraftwagen meist festgelegt ist, ist eine Spurweitenveränderung bei Spezialfahrzeugen u.a. aus folgenden Gründen vorteilhaft. Das Spezialfahrzeug 19 soll bei Hanglagen nicht umkippen, deshalb ist die Spurweite um 50% oder sogar um 100% variierbar. Das Spezialfahrzeug 19 kann damit sowohl auf schmalen Straßen, Feldwegen, unwegsamen Geländer, Minenfelder, Hängen, Wäldern als auch auf Fahrgassen fahren. Fahrgassen können unterschiedliche Breiten aufweisen, daher ist es von Vorteil, dass die Achsvorrichtung 20 eine stufenlose Spurweitenänderung erlaubt. Auf Straßen kann die Spurweite des Spezialfahrzeugs 19 minimal eingestellt werden. Das Spezialfahrzeug 19 umfasst ein Führerhaus und einen Tank. Das Führerhaus ist über der Vorderachse angeordnet. Der Tank ist über der Hinterachse angeordnet. Ist der Tank befüllt, so ist die Hinterachse stärker belastet als die Vorderachse. Die spurweitenveränderliche Achsvorrichtung 20 schwenkt eine Einzelradaufhängung mittels einer gelenkigen Parallelführung derart aus, dass eine Spurweite bezüglich einer anderen Einzelradaufhängung der Vorderachse vergrößert wird. Beim Ausschwenken verringert die Einzelradaufhängung gleichzeitig den Achsabstand zur Hinterachse wodurch die Hinterachse entlastet wird. Bei einem Einschwenken wird gleichzeitig die Spurweite verringert und der Achsabstand erhöht.

### BEZUGSZEICHENLISTE

- 1: Basiskonsole
- 2: Mittelachsbolzen
- 3: Achskonsole
- 4: Haupttragarm
- 5: Parallelführungsarm
- 6: Übergangsjoch
- 7: Gelenkbolzen
- 8: Gelenkbolzen
- 7a: Gelenkbolzen
- 8a: Gelenkbolzen
- 9: Achsschenkelzapfen
- L: Fahrzeuglängsachse
- 10: Radnabentrichter
- 11: Lenkzylinder
- 12: Lenkhebel
- 13: Rad
- 14: Schwenkzylinder
- 15a: Fahrzeugrahmenstelle
- 15b: Fahrzeugrahmenstelle
- 15c: Fahrzeugrahmenstelle
- 16: Neigungs- und Stützzylinder
- 17: Haupt-Federungszylinder
- 18: Spurweitenveränderliche Achsvorrichtung
- 19: Spezialfahrzeug
- 20: Spurweitenveränderliche Achsvorrichtung
- 21: Gelenkige Parallelführung
- 22: Einzelradaufhängung

## Patentansprüche

1. Spurweitenveränderliche Achsvorrichtung (18; 20) für ein Spezialfahrzeug mit:
einer gelenkigen Parallelführung (21) und
einer Einzelradaufhängung (22)
**dadurch gekennzeichnet, dass**
die Einzelradaufhängung (22) an der gelenkigen Parallelführung (21) angeordnet ist, um spurweitenveränderlich und einen Achsabstand zu einer weiteren Achse des Spezialfahrzeugs variierend schwenkbar zu sein.

2. Spurweitenveränderliche Achsvorrichtung (18; 20) nach Anspruch 1
**dadurch gekennzeichnet, dass**
die spurweitenveränderliche Achsvorrichtung (18; 20) eine Vorderachse umfasst und die weitere Achse eine Hinterachse umfasst.

3. Spurweitenveränderliche Achsvorrichtung (1) nach Anspruch 1 oder 2
**dadurch gekennzeichnet, dass**
die gelenkige Parallelführung (21)
einen Haupttragarm (4) mit einem ersten und einem zweiten Ende;
einen Parallelführungsarm (5) mit einem ersten und einem zweiten Ende, wobei der Parallelführungsarm (5) parallel zum Haupttragarm (4) angeordnet ist; und
ein Übergangsjoch (6), das am erste Ende des Haupttragarm (4) angelenkt ist und das am erste Ende des Parallelführungsarms (5) angelenkt ist, umfasst.

4. Spurweitenveränderliche Achsvorrichtung (18; 20) nach Anspruch 3
**dadurch gekennzeichnet, dass**
das zweite Ende des Haupttragarms (4) ein Gelenk (1, 7a) zur Verbindung mit einem Fahrzeugrahmen (15a) des Spezialfahrzeugs aufweist und
das zweite Ende des Parallelführungsarms (5) ein Gelenk (1, 8a) zur Verbindung mit dem Fahrzeugrahmen (15a) aufweist.

5. Spurweitenveränderliche Achsvorrichtung (18; 20) nach Anspruch 3 oder 4
**dadurch gekennzeichnet, dass**
die Einzelradaufhängung (22) am Übergangsjoch (6) angeordnet ist.

6. Spurweitenveränderliche Achsvorrichtung (18; 20) nach einem der vorhergehenden Ansprüche
**dadurch gekennzeichnet, dass**
die spurweitenveränderliche Achsvorrichtung (18) einen Schwenkaktor (14) umfasst, der an einem Fahrzeugrahmen (15b) des Spezialfahrzeugs angelenkt ist und der an der gelenkigen Parallelführung (21) angelenkt ist, um die gelenkige Parallelführung (21) bezüglich des Fahrzeugrahmens (15b) zu schwenken.

7. Spurweitenveränderliche Achsvorrichtung (18; 20) nach einem der vorhergehenden Ansprüche
**dadurch gekennzeichnet, dass**
die spurweitenveränderliche Achsvorrichtung (18; 20) einen Lenkaktor (11) umfasst, der an der Einzelradaufhängung (22) angelenkt ist und der an der gelenkigen Parallelführung (21) angelenkt ist, um die Einzelradaufhängung (22) bezüglich der gelenkigen Parallelführung (21) zu schwenken.

8. Spurweitenveränderliche Achsvorrichtung (18; 20) nach einem der vorhergehenden Ansprüche
**dadurch gekennzeichnet, dass**
die spurweitenveränderliche Achsvorrichtung (18) eine Basiskonsole (1) umfasst, die um eine Längsachse (L) des Spezialfahrzeugs schwenkbar am Fahrzeugrahmen (15a) angelenkt ist und die an der gelenkigen Parallelführung (21) angelenkt ist.

9. Spurweitenveränderliche Achsvorrichtung (18; 20) nach einem der vorhergehenden Ansprüche
**dadurch gekennzeichnet, dass**
die spurweitenveränderliche Achsvorrichtung (18; 20) einen Radnabenantrieb umfasst.

10. Spezialfahrzeug (19) mit wenigstens zwei spurweitenveränderlichen Achsvorrichtungen (18; 20) nach einem der vorhergehenden Ansprüche.

11. Verwendung des Spezialfahrzeugs nach Anspruch 10 als landwirtschaftliches Fahrzeug, als Minenräumfahrzeug oder als forstwirtschaftliches Fahrzeug.

## Geänderte Patentansprüche

### Geänderte Patentansprüche gemäss Regel 137(2) EPÜ.

1. Spurweitenveränderliche Achsvorrichtung (18; 20) für ein Spezialfahrzeug mit:
einer gelenkigen Parallelführung (21) und
einer Einzelradaufhängung (22)
**dadurch gekennzeichnet, dass**
die Einzelradaufhängung (22) an der gelenkigen Parallelführung (21) angeordnet ist,
um spurweitenveränderlich und einen Achsabstand zu einer weiteren Achse des Spezialfahrzeugs variierend schwenkbar zu sein.

2. Spurweitenveränderliche Achsvorrichtung (18; 20) nach Anspruch 1
**dadurch gekennzeichnet, dass**
die spurweitenveränderliche Achsvorrichtung (18; 20) eine Vorderachse umfasst und die weitere Achse eine Hinterachse umfasst.

3. Spurweitenveränderliche Achsvorrichtung (1) nach Anspruch 1 oder 2
**dadurch gekennzeichnet, dass**
die gelenkige Parallelführung (21)
einen Haupttragarm (4) mit einem ersten und einem zweiten Ende;
einen Parallelführungsarm (5) mit einem ersten und einem zweiten Ende, wobei der Parallelführungsarm (5) parallel zum Haupttragarm (4) angeordnet ist; und
ein Übergangsjoch (6), das am erste Ende des Haupttragarm (4) angelenkt ist und das am erste Ende des Parallelführungsarms (5) angelenkt ist, umfasst.

4. Spurweitenveränderliche Achsvorrichtung (18; 20) für ein Spezialfahrzeug, wobei das Spezialfahrzeug einen Fahrzeugrahmen umfasst, nach Anspruch 3 **dadurch gekennzeichnet, dass**
das zweite Ende des Haupttragarms (4) ein Gelenk (1, 7a) zur Verbindung mit dem Fahrzeugrahmen (15a) des Spezialfahrzeugs aufweist und
das zweite Ende des Parallelführungsarms (5) ein Gelenk (1, 8a) zur Verbindung mit dem Fahrzeugrahmen (15a) aufweist.

5. Spurweitenveränderliche Achsvorrichtung (18; 20) nach Anspruch 3 oder 4
**dadurch gekennzeichnet, dass**
die Einzelradaufhängung (22) am Übergangsjoch (6) angeordnet ist.

6. Spurweitenveränderliche Achsvorrichtung (18; 20) nach einem der vorhergehenden Ansprüche
**dadurch gekennzeichnet, dass**
die spurweitenveränderliche Achsvorrichtung (18) einen Schwenkaktor (14) umfasst, der am Fahrzeugrahmen (15b) des Spezialfahrzeugs angelenkbar ist und der an der gelenkigen Parallelführung (21) angelenkt ist, um die gelenkige Parallelführung (21) bezüglich des Fahrzeugrahmens (15b) zu schwenken.

7. Spurweitenveränderliche Achsvorrichtung (18; 20) nach einem der vorhergehenden Ansprüche
**dadurch gekennzeichnet, dass**
die spurweitenveränderliche Achsvorrichtung (18; 20) einen Lenkaktor (11) umfasst, der an der Einzelradaufhängung (22) angelenkt ist und der an der gelenkigen Parallelführung (21) angelenkt ist, um die Einzelradaufhängung (22) bezüglich der gelenkigen Parallelführung (21) zu schwenken.

8. Spurweitenveränderliche Achsvorrichtung (18; 20) für ein Spezialfahrzeug, das eine Längsachse (L) aufweist, nach einem der vorhergehenden Ansprüche **dadurch gekennzeichnet, dass**
die spurweitenveränderliche Achsvorrichtung (18) eine Basiskonsole (1) umfasst, die um die Längsachse (L) des Spezialfahrzeugs schwenkbar am Fahrzeugrahmen (15a) angelenkt ist und die an der gelenkigen Parallelführung (21) angelenkt ist.

9. Spurweitenveränderliche Achsvorrichtung (18; 20) nach einem der vorhergehenden Ansprüche
**dadurch gekennzeichnet, dass**
die spurweitenveränderliche Achsvorrichtung (18; 20) einen Radnabenantrieb umfasst.

10. Spezialfahrzeug (19) mit wenigstens zwei spurweitenveränderlichen Achsvorrichtungen (18; 20) nach einem der vorhergehenden Ansprüche.

11. Verwendung des Spezialfahrzeugs nach Anspruch 10 als landwirtschaftliches Fahrzeug, als Minenräumfahrzeug oder als forstwirtschaftliches Fahrzeug.
